# EUROPEAN PATENT SPECIFICATION

(11) **EP 4 229 315 B1**
(45) Date of publication and mention of the grant of the patent: **13.08.2025**
(21) Application number: 21805616.6
(22) Date of filing: 18.10.2021
(51) Int. Cl.: F16F 9/49

(54) **SHOCK ABSORBER WITH HYDRAULIC REBOUND STOP**
STOSSDÄMPFER MIT HYDRAULISCHEM AUSFEDERUNGSSTOPPER
AMORTISSEUR AVEC BUTÉE DE REBOND HYDRAULIQUE

(30) Priority: 19.10.2020 IT 202000024643
(43) Date of publication of application: 23.08.2023
(73) Proprietor: Marelli Suspension Systems Italy S.p.A., 20011 Corbetta (MI) (IT)
(72) Inventor: SOTTILE, Salvatore, 98050 Terme Vigliatore (Messina) (IT); SANTINI, Andrea, 10093 Collegno (Torino) (IT); ZUCCA, Mauro, 10020 Baldissero Torinese (Torino) (IT); FORTUNATO, Elena, 10148 Torino (IT); GOIA, Marco, 10137 Torino (IT)
(74) Representative: Savoca, Agatino
(86) International application number: PCT/IB2021/059556
(87) International publication number: WO 2022/084822

(56) References cited:
- EP-A1- 2 302 252
- US-A1- 2018 163 813
- US-A1- 2019 154 104
- US-A1- 2019 353 221

## Description

This invention relates generally to a hydraulic end of stroke stop for use on a hydraulic shock absorber for vehicle suspension, such as of the mono-tube or twin-tube type. More specifically, this invention relates to a hydraulic stop operating during the extension movement of the shock absorber.

Traditionally, a hydraulic shock absorber for a vehicle suspension has a first end of stroke buffer, which is arranged within the shock absorber and is configured to act during the extension stroke of the shock absorber, and a second end of stroke buffer, which is arranged outside the shock absorber and is configured to act during the compression stroke of the shock absorber.

End of stroke buffers may be of an elastic or hydraulic type.

Elastic end of stroke buffers are made of high-stiffness elastic material (e.g., polyurethane) and their function is to ensure that when the end of stroke position of the shock absorber is reached, whether during the extension or compression phase, there are elastic shocks between the surfaces that come into contact, thus preventing these shocks from occurring between metallic surfaces. Therefore, elastic end of stroke buffers behave like springs that act parallel to the mechanical spring (mainspring) of the suspension at the end of stroke positions and have a much higher stiffness than the mechanical spring of the suspension. However, elastic end of stroke buffers do not act at any intermediate point of the shock absorber stroke.

Elastic end of stroke buffers have, among others, the following disadvantage. During a violent impact on the buffers, in extension or compression, caused for example by the presence of obstacles (potholes or bumps) on the road, the kinetic energy of the suspension is transformed into elastic deformation energy of the concerned buffer. The elastic energy stored by the buffer is completely (or nearly) released in the next phase of motion reversal. Therefore, after the impact, the suspension continues to oscillate without its motion being sufficiently damped, and these oscillations result in a worsening of the contact conditions between the road and the tire, and therefore a worsening of the vehicle's grip on the road.

To overcome the aforesaid disadvantage of elastic buffers, hydraulic stops are known to be used, either alone or in combination with elastic buffers.

Hydraulic stops are dissipating devices which, when an end of stroke position is reached and depending on the speed of movement of the shock absorber, allow the kinetic energy of the suspension to be dissipated hydraulically, namely by forcing a certain volume of oil contained in the shock absorber to laminate through appropriately calibrated passages. In this way, the energy produced as a result of an impact is hydraulically dissipated and is not returned to the suspension in the subsequent reversal of motion. The oscillations of the suspension are thus dampened, resulting in improved grip conditions between the road and the tire and therefore an improvement of the vehicle's grip on the road.

In addition, because the hydraulic stops act in parallel with their respective elastic buffers, part of the energy generated by the impact is hydraulically absorbed, and thus the size of the elastic buffers and their supports may be reduced.

Finally, while elastic buffers react only as a function of the deformation to which they are subjected, the action of hydraulic stops is proportional to the speed with which the shock absorber rod reaches the end of stroke position. Therefore hydraulic stops allow for a much more progressive handling of the impacts that occur when the shock absorber reaches its end of stroke positions, resulting in reduced noise.

Hydraulic stops are typically used as rebound end of stroke devices, wherein the automotive hydraulic stop comprises a cup-shaped body, which is adapted to be attached within the rebound chamber of the shock absorber, and a piston, which is adapted to be attached to the stem of the shock absorber. The piston is capable of sliding along a cylindrical side wall of the cup-shaped body. Said wall expediently has a series of channels to allow oil to escape when the piston is pushed toward the cup-shaped body during the extension stroke of the shock absorber, and thus compresses the oil contained in a working chamber of the cup-shaped body.

In a buffer thus constructed, the piston motion, and therefore of the shock absorber rod motion, is therefore damped during the shock absorber extension stroke, due to the leaking of oil from the cup-shaped body through channels provided in the cylindrical side wall of said body. These channels have a decreasing section in the direction of the extension stroke of the shock absorber in such a way that, as the piston moves toward the inside of the cup-shaped body, the damping effect produced by the device increases.

US 2018/163 813 A1 discloses a hydraulic shock absorber for a vehicle suspension.

The object of this invention is to provide a hydraulic buffer operating in extension for a hydraulic shock absorber of a vehicle suspension, which combines strength, low inertia and optimal friction coefficients at the interface between the piston and the cup-shaped body.

A further object of this invention is to provide a hydraulic buffer that may be manufactured in a simple and economical manner.

These and other objects are fully achieved according to the invention by a hydraulic stop having the features defined in the appended claims.

In summary, the invention is based on the idea of making parts of the piston (namely, the cylindrical body and/or the sealing ring, as defined below) and/or the cup-shaped body of plastic material, whereby these parts may be shaped in such a way as to improve the mechanical and structural properties of the device. This permits the device to be lighter from a structural point of view and simplifies the manufacturing.

Advantageous embodiments of the invention are specified in the dependent claims, the content of which is to be understood as an integral and integrating part of the following description.

### Brief description of the drawings

The functional and structural features of some preferred embodiments of a shock absorber with hydraulic rebound buffer according to the invention will now be described. Reference is made to the appended drawings, wherein:
- Fig. 1 is an axial sectional view of a shock absorber comprising a rebound stop, according to one embodiment of the invention;
- Fig. 2 is an axial sectional view of a hydraulic rebound stop incorporated in a shock absorber, according to one embodiment of the invention;
- Fig. 3 is a longitudinal sectional exploded view of a hydraulic rebound stop, according to one embodiment of the invention;
- Fig. 4A and 4B are two perspective views of a piston for a hydraulic stop according to one embodiment of the invention, during an extension stroke of the shock absorber, and during a compression stroke of the shock absorber, respectively;
- Fig. 5A and 5B are respectively a side and perspective view from below of a piston for a hydraulic stop according to one embodiment of the invention; and
- Fig. 6A and 6B are, respectively, a side and top perspective view of a piston for a hydraulic stop according to a further embodiment of the invention.

### Detailed description

Before describing a plurality of embodiments of the invention in detail, it should be clarified that the invention is not limited in its application to the construction details and configuration of the components presented in the following description or illustrated in the drawings. The invention may assume other embodiments and be implemented or constructed in practice in different ways. It should also be understood that the phraseology and terminology have a descriptive purpose and should not be construed as limiting.

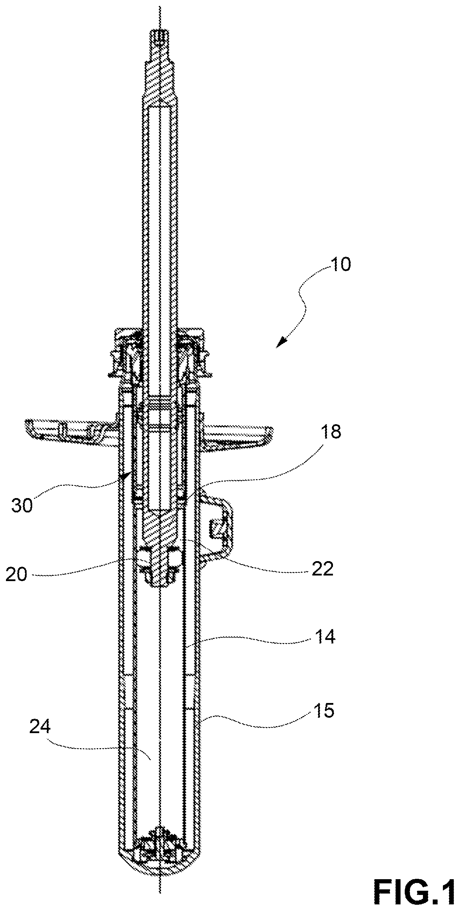

Referring by way of example to Fig. 1, a hydraulic shock absorber 10, particularly for vehicle suspension, comprises a cylindrical tube 14, a rod 18, which is arranged coaxially to the cylindrical tube 14 and partially protrudes therefrom, and a primary piston 20, which is attached to a first end of the rod 18 and is slidably mounted in the cylindrical tube 14 so as to divide the inner volume of the cylindrical tube 14 into an extension chamber 22 and a compression chamber 24.

The hydraulic shock absorber 10 further comprises a hydraulic stop 30, which is arranged in the extension chamber 22 and is adapted to operate during the extension stroke of the shock absorber 10 to hydraulically dissipate kinetic energy as the shock absorber 10 approaches an extended end of stroke position.

The hydraulic stop 30 comprises a cup-shaped body 32 mounted in the extension chamber 24 of the shock absorber 10, coaxially thereto, and an auxiliary piston 34 mounted to said first end of the rod 18 of the shock absorber 10, coaxially thereto, below the primary piston 20 of the shock absorber.

The cup-shaped body 32, in turn, comprises a side wall 36 that defines, together with the auxiliary piston 34 of the hydraulic stop 30, a working chamber 52, which expediently coincides with the end section of the extension chamber 24. Said working chamber 52 is therefore contained within the inner volume of the cup-shaped body 32 and is configured so that a damping fluid from the shock absorber 10 is compressed by the auxiliary piston 34 of the hydraulic stop 30 during the extension stroke of the shock absorber 10.

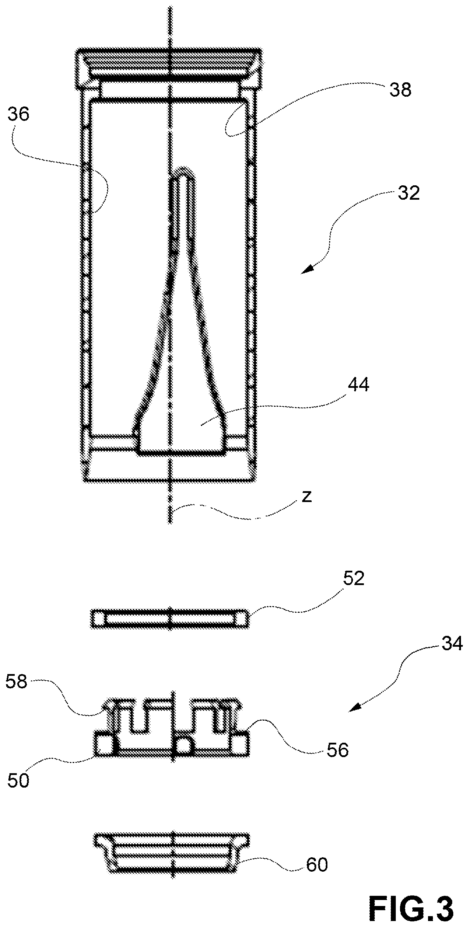

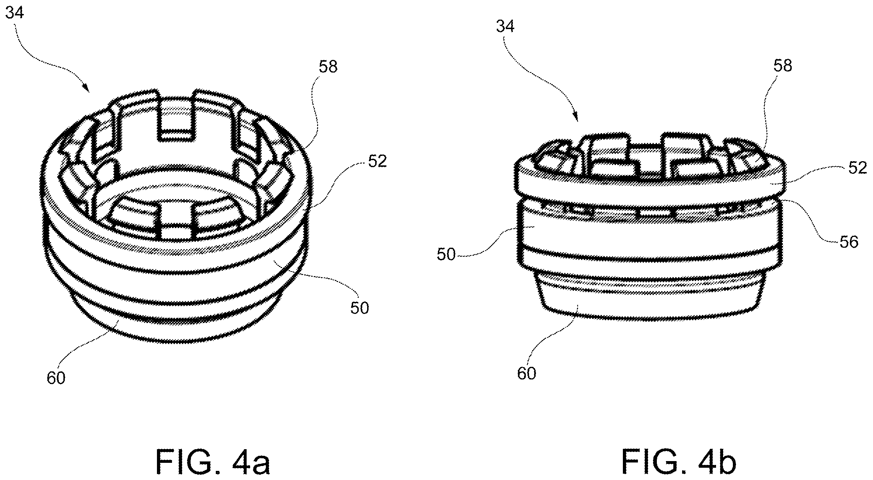

The auxiliary piston 34 comprises a cylindrical body 50, which is attached to the rod 18 of the shock absorber 10 and has an outer diameter smaller than the inner diameter of the side wall 36 of the cup-shaped body 32, a sealing ring 54, which is axially mounted slidable about the cylindrical body 50 and is adapted to seal against the inner surface of the side wall 36 of the cup-shaped body 32, and a first and a second annular abutment element 56, 58, which are axially constrained to the cylindrical body 50 and are configured to axially restrict, in either direction, the axial sliding movement of the seal ring 54 along the cylindrical body 50. Expediently, the first annular abutment element 56 (i.e., the axially lower abutment for the sealing ring 54, as illustrated by way of example in Fig. 3 and 4B) is formed by the upper surface of a ring integrally forming part of the cylindrical body 50.

The sealing ring 54, the first abutment element 56, and the second abutment element 58 are configured whereby, when the sealing ring 54 runs along the inner surface of the side wall 36 of the cup-shaped body 32 during the extension stroke of the shock absorber 10, the sealing ring 54 is in abutment against the first abutment element 56 and no damping fluid is allowed to pass from one side of the sealing ring 54 to the other, and during the compression stroke of the shock absorber 10, the sealing ring 54 is in abutment against the second abutment element 58 and damping fluid is allowed to pass from one side of the sealing ring 54 to the other.

The cylindrical body 50 and the sealing ring 54 are made of a plastic material, and the auxiliary piston 34 further comprises an annular body 60 made of a metallic material, adapted to form a support surface or axial abutment to the cylindrical body 50.

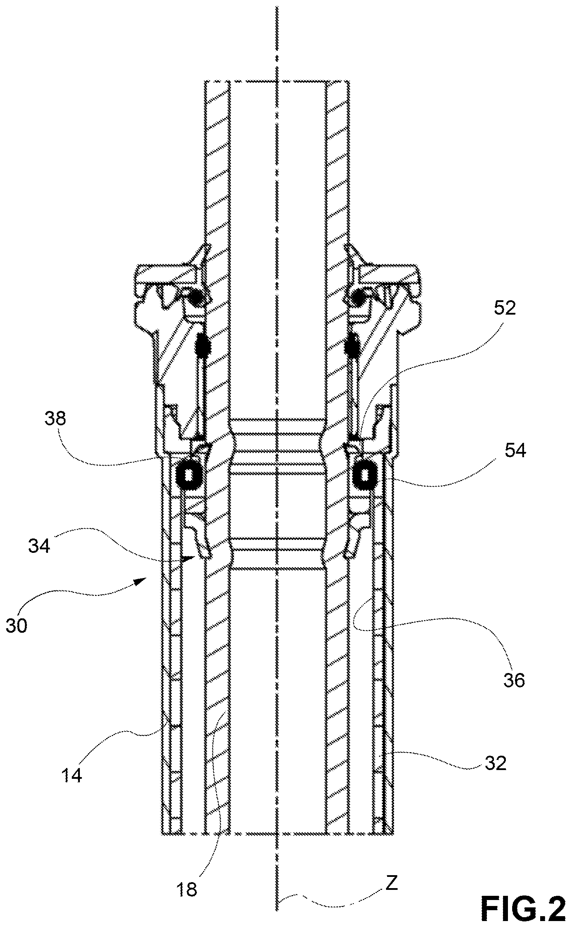

In effect, the annular body 60 is coupled to the cylindrical body 50 on the auxiliary piston side 34 axially opposite to the side facing the working chamber 52. The auxiliary piston 34 is thus configured whereby, when the cylindrical body 50 reaches the extended end of stroke position of the hydraulic shock absorber 10, the annular body 60 forms an axial abutment for said cylindrical body 50, preventing it from sliding along the rod 18 in the opposite direction, and axially locking the auxiliary piston 34 on the rod 18. For this purpose, the cup-shaped body 32 is preferably provided with a shoulder 38, radially projecting inwardly from the cup-shaped body 32 and adapted to form an abutment against which the auxiliary piston 34 will rest when the hydraulic shock absorber 10 is in an extended end of stroke position (as exemplified in Fig. 2).

According to an embodiment (illustrated by way of example in Fig. 2), the rod 18 comprises a coupling seat having a profile complementary to an inner profile of the cylindrical body 50 and the annular body 60, whereby said cylindrical body 50 and annular body 60 are attached to the rod 18 by shape-coupling of their respective profiles.

Preferably, the rod 18 has two circumferential recesses at the axially outermost edges of the cylindrical body 50 and the annular body 60, said outermost edges being radially recessed toward the axis of the rod 18 whereby they abut within the respective circumferential recesses. Thus, an optimal shape-coupling of the auxiliary piston 34 to the piston rod 18 is achieved.

The annular body 60 is in turn connected to the cylindrical body 50 by shape-coupling between at least one hook 62, projecting axially from the cylindrical body 50, and a prominence projecting radially from the annular body 60.

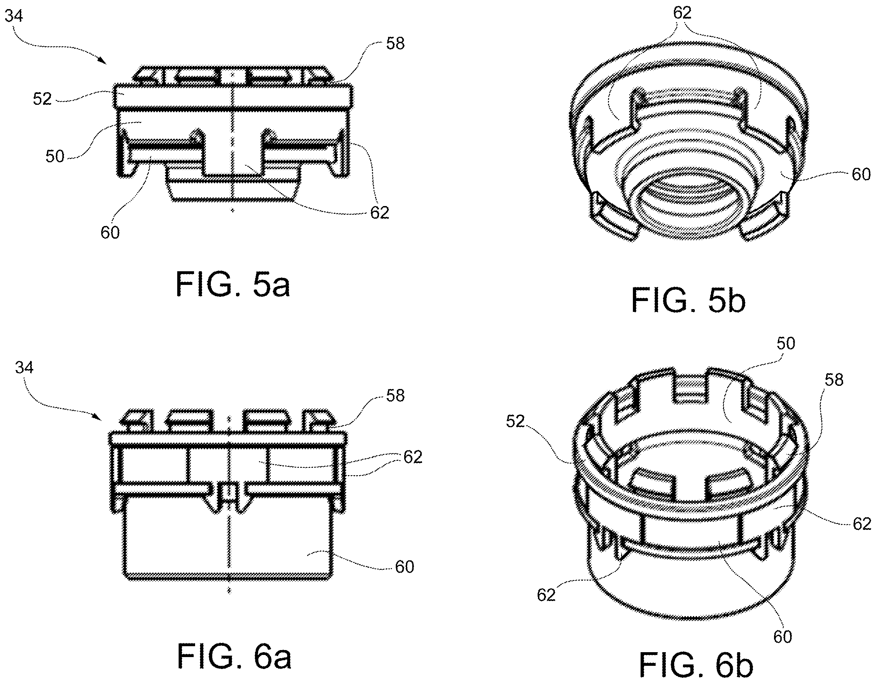

Said coupling may be achieved by configuring the hook 62 to engage with the prominence of the annular body 60 by surrounding it from the outside (as, for example, shown in Fig. 5A and 5B).

Alternatively (as, for example, shown in Fig. 6A and 6B), the prominence projecting radially from the annular body 60 may comprise at least one radial seat 64 configured as a groove into which the hook 64 is inserted and fixed.

According to an embodiment, the sealing ring 54 has an open annular shape.

According to a preferred embodiment, the cup-shaped body 32 is made of a plastic material.

According to a preferred embodiment, the plastic material from which the cylindrical body 50 and/or the sealing ring 54 and/or the cup-shaped body 32 is made is a composite material, reinforced with glass fibers or carbon fibers.

According to a preferred embodiment, the hydraulic shock absorber 10 is configured as a hydraulic shock absorber of the twin-tube type for a vehicle suspension. In such a configuration, the hydraulic shock absorber 10 comprises an outer cylindrical tube (coinciding with a body tube 15 of the hydraulic shock absorber 10), and an inner cylindrical tube (coinciding, in this embodiment, with the aforesaid cylindrical tube 14, against which the cup-shaped body 32 abuts radially). The inner cylindrical tube is coaxial to the outer cylindrical tube and defines therewith an annular chamber filled in an upper portion thereof with gas, and the stem 18 is arranged coaxially to the two cylindrical tubes and partially protrudes therefrom. The primary piston 20 is slidably mounted in the inner cylindrical tube and is attached to the lower end of the rod 18. The primary piston 20 separates the inner volume of the inner cylindrical tube 14 into an extension chamber and a compression chamber, within which the damping fluid (oil) is contained.

According to one aspect of the invention (not illustrated), the hydraulic shock absorber 10 is configured as a hydraulic shock absorber of the single-tube type for a vehicle suspension, i.e., comprising only the outer cylindrical tube (coinciding with the body tube 15 of the hydraulic shock absorber 10, said body tube 15 in turn coinciding, in this embodiment, with said cylindrical tube 14, against which the cup-shaped body 32 abuts radially).

Preferably, axial channels 44 are provided on the inner surface of the side wall 36 of the cup-shaped body 32, which extend parallel to a longitudinal axis (z) of the cup-shaped body 32 and are adapted to allow the damping fluid to flow axially out of the working chamber 52 when the auxiliary piston 34 flows through the working chamber 52 toward an extended end of stroke position of the shock absorber 10 (e.g., toward the shoulder 38 of the cup-shaped body 32).

Said axial channels 44 have a cross section, the area of which decreases continuously along the longitudinal axis (z) toward said extended end-of-travel position of the shock absorber 10.

According to an embodiment, not forming part of the invention, the cup-shaped body 32 is made of a plastic material, and the entire outer surface of the side wall 36 of the cup-shaped body 32 is in direct contact with the cylindrical tube 14, said cylindrical tube 14 forming the outer cylindrical tube of the shock absorber 10. More precisely, it is intended that, given that the portion (axially) of the cup-shaped body 32 along which the auxiliary piston 34 is sliding, substantially the entire surface of the side wall 36, corresponding to said portion and facing the inner wall of the cylindrical tube 15, is in contact therewith.

Throughout this description and in the claims, terms, and expressions indicating positions and orientations, such as "longitudinal," "transverse," "vertical," or "horizontal," are to refer to the longitudinal axis (z) of the hydraulic shock absorber 10.

Various aspects and embodiments of a hydraulic shock absorber with a hydraulic rebound stop according to the invention have been described. It is understood that each embodiment may be combined with any other embodiment. Furthermore, the invention is not limited to the described embodiments, but may be varied within the scope defined by the appended claims.

## Claims

1. Hydraulic shock absorber (10), particularly for vehicle suspension, comprising
a cylindrical tube (14),
a stem (18) which is arranged coaxially to the cylindrical tube (14) and partially protrudes therefrom,
a primary piston (20) which is fixed to a first end of the rod (18) and is slidably mounted in the cylindrical tube (14) so as to divide the inner volume of the cylindrical tube (14) into an extension chamber (22) and a compression chamber (24), and
a hydraulic buffer (30) which is arranged in the extension chamber (22) and is adapted to operate during the extension stroke of the shock absorber (10) to hydraulically dissipate kinetic energy when the shock absorber (10) approaches an extended end of stroke position;
wherein the hydraulic buffer (30) comprises a cup-shaped body (32) mounted in the extension chamber (24) of the shock absorber (10), coaxially thereto, and an auxiliary piston (34) mounted to said first end of the rod (18) of the shock absorber (10), coaxially thereto, below the primary piston (20) of the shock absorber, and
wherein the cup-shaped body (32) comprises a side wall (36) which defines, together with the auxiliary piston (34) of the hydraulic buffer (30), a working chamber (52) in which a damping fluid of the shock absorber (10) is compressed by the auxiliary piston (34) of the hydraulic buffer (30) during the extension stroke of the shock absorber (10),
the auxiliary piston (34) comprising a cylindrical body (50), fixed to the rod (18) of the shock absorber (10) and having an outer diameter smaller than the inner diameter of the side wall (36) of the cup-shaped body (32), a sealing ring (54), which is mounted axially slidably around the cylindrical body (50) and is adapted to seal against the inner surface of the side wall (36) of the cup-shaped body (32), and a first and a second annular abutment element (56, 58), which are axially constrained to the cylindrical body (50) and are configured to axially limit, in both directions, the axial sliding movement of the sealing ring (54) along the cylindrical body (50), the sealing ring (54), the first abutment element (56) and the second abutment element (58) being configured in such a way that when the sealing ring (54) slides along the inner surface of the side wall (36) of the cup-shaped body (32) during the extension stroke of the shock absorber (10) the sealing ring (54) abuts against the first abutment element (56) and there is no passage of damping fluid from one side to the other of the sealing ring (54), whereas during the compression stroke of the shock absorber (10) the sealing ring (54) abuts against the second abutment element (58) and the passage of damping fluid from one side to the other of the sealing ring (54) is allowed,
wherein the cylindrical body (50) and the sealing ring (54) are made of plastic material,
and wherein the auxiliary piston (34) further comprises an annular body (60) made of metallic material, coupled to the cylindrical body (50) on the side of the auxiliary piston (34) axially opposite to that facing the working chamber (52), said annular body (60) being adapted to form a support surface or axial abutment to the cylindrical body (50),
**characterized in that**
the annular body (60) is connected to the cylindrical body (50) by shape-coupling between at least one hook (62), protruding axially from the cylindrical body (50), and a prominence protruding radially from the annular body (60).

2. Hydraulic shock absorber according to claim 1, wherein the rod (18) comprises a coupling seat, having a profile complementary to an inner profile of the cylindrical body (50) and of the annular body (60), in such a way that said cylindrical body (50) and annular body (60) are fixed to the rod (18) by means of shape-coupling of the respective profiles.

3. Hydraulic shock absorber according to claim 2, wherein the rod (18) has two circumferential recesses, at the axially outermost edges of the cylindrical body (50) and of the annular body (60), said outer edges being radially recessed towards the axis of the rod (18), in such a way as to abut against the respective circumferential recesses.

4. Hydraulic shock absorber according to any of the preceding claims, wherein the prominence radially protruding from the annular body (60) comprises at least one radial seat (64) configured as a groove into which the hook (64) is inserted and fixed.

5. Hydraulic shock absorber according to any of the preceding claims, wherein the plastic material with which the sealing ring (54) is made is a composite material, reinforced with glass fibers or carbon fibers.

6. Hydraulic shock absorber according to any of the preceding claims, wherein the cup-shaped body (32) is preferably provided with a shoulder (38), which protrudes radially towards the inside of the cup-shaped body (32) and is adapted to form a stop against which the auxiliary piston (34) abuts when the hydraulic shock absorber (10) is in an extended end of stroke position.

7. Hydraulic shock absorber according to any of the preceding claims, wherein the sealing ring (54) has an open annular shape.

8. Hydraulic shock absorber according to any of the preceding claims, wherein the hydraulic shock absorber (10) is configured as a twin-tube hydraulic shock absorber for vehicle suspension, comprising an outer cylindrical tube coinciding with a body tube (15) of the hydraulic shock absorber (10), and an inner cylindrical tube coinciding with the cylindrical tube (14) against which the cup-shaped body (32) abuts radially, said inner cylindrical tube being coaxial to the outer cylindrical tube and defining therewith an annular chamber filled in an upper portion thereof with gas, the rod (18) being arranged coaxially to said cylindrical tubes and partially emerging therefrom.

9. Hydraulic shock absorber according to any of claims 1 to 7, wherein the hydraulic shock absorber (10) is configured as a mono-tube hydraulic shock absorber for vehicle suspension, comprising only the body tube (15) of the hydraulic shock absorber (10), said body tube (15) coinciding with the cylindrical tube (14) against which the cup-shaped body (32) abuts radially.

10. Hydraulic shock absorber according to any of the preceding claims, wherein axial channels (44) are provided on the inner surface of the side wall (36) of the cup-shaped body (32) which extend parallel to a longitudinal axis (z) of the cup-shaped body (32) and are adapted to allow the damping fluid to exit axially from the working chamber (52) when the auxiliary piston (34) slides into the working chamber (52) towards the extended end of stroke of the shock absorber (10), said axial channels (44) having a cross section, the area of which continuously decreases along the longitudinal axis (z) towards said extended end-of-travel of the shock absorber (10).

11. Hydraulic shock absorber according to any of the preceding claims, wherein the cup-shaped body (32) is made of plastic material.

## Patentansprüche

1. Hydraulischer Stoßdämpfer (10), insbesondere für eine Fahrzeugfederung, umfassend
ein zylindrisches Rohr (14),
einen Schaft (18), der zu dem zylindrischen Rohr (14) koaxial angeordnet ist und teilweise aus diesem vorsteht,
einen Primärkolben (20), der an einem ersten Ende der Stange (18) befestigt ist und in dem zylindrischen Rohr (14) verschiebbar montiert ist, um das Innenvolumen des zylindrischen Rohrs (14) in eine Expansionskammer (22) und eine Kompressionskammer (24) zu unterteilen, und
einen Hydraulikpuffer (30), der in der Expansionskammer (22) angeordnet ist und angepasst ist, um während des Expansionshubs des Stoßdämpfers (10) zu arbeiten, um kinetische Energie hydraulisch abzubauen, wenn sich der Stoßdämpfer (10) einer expandierten Hubendposition nähert;
wobei der Hydraulikpuffer (30) einen becherförmigen Körper (32), der in der Expansionskammer (24) des Stoßdämpfers (10), zu dieser koaxial, montiert ist, und einen Hilfskolben (34) umfasst, der an dem ersten Ende der Stange (18) des Stoßdämpfers (10) unterhalb des Primärkolbens (20) des Stoßdämpfers, zu dieser koaxial, montiert ist, und
wobei der becherförmige Körper (32) eine Seitenwand (36) umfasst, die, zusammen mit dem Hilfskolben (34) des Hydraulikpuffers (30), eine Arbeitskammer (52) begrenzt, in der ein Dämpfungsfluid des Stoßdämpfers (10) während des Expansionshubs des Stoßdämpfers (10) durch den Hilfskolben (34) des Hydraulikpuffers (30) komprimiert wird,
der Hilfskolben (34) umfassend einen zylindrischen Körper (50), der an der Stange (18) des Stoßdämpfers (10) befestigt ist und einen Außendurchmesser aufweist, der kleiner als der Innendurchmesser der Seitenwand (36) des becherförmigen Körpers (32) ist, einen Dichtungsring (54), der axial verschiebbar um den zylindrischen Körper (50) herum montiert ist und angepasst ist, um gegen die Innenoberfläche der Seitenwand (36) des becherförmigen Körpers (32) abzudichten, und ein erstes und ein zweites ringförmiges Anschlagelement (56, 58), die an dem zylindrischen Körper (50) axial eingeschränkt sind und konfiguriert sind, um die axiale Gleitbewegung des Dichtungsrings (54) entlang des zylindrischen Körpers (50) in beide Richtungen axial zu begrenzen, wobei der Dichtungsring (54), das erste Anschlagelement (56) und das zweite Anschlagelement (58) auf eine Weise konfiguriert sind, dass, wenn der Dichtungsring (54) entlang der Innenoberfläche der Seitenwand (36) des becherförmigen Körpers (32) während des Expansionshubs des Stoßdämpfers (10) gleitet, der Dichtungsring (54) an das erste Anschlagelement (56) anschlägt und es keinen Durchtritt des Dämpfungsfluids von einer Seite des Dichtungsrings (54) zu der anderen gibt, wohingegen, während dem Kompressionshub des Stoßdämpfers (10), der Dichtungsring (54) an das zweite Anschlagelement (58) anschlägt und der Durchtritt des Dämpfungsfluids von einer Seite des Dichtungsrings (54) zu der anderen möglich ist,
wobei der zylindrische Körper (50) und der Dichtungsring (54) aus Kunststoffmaterial bestehen und wobei der Hilfskolben (34) ferner einen ringförmigen Körper (60) umfasst, der aus metallischem Material besteht, der mit dem zylindrischen Körper (50) auf der Seite des Hilfskolbens (34) gekoppelt ist, die der Arbeitskammer (52) axial gegenüberliegt, wobei der ringförmige Körper (60) angepasst ist, um eine Stützoberfläche oder einen axialen Anschlag an den zylindrischen Körper (50) auszubilden,
**dadurch gekennzeichnet, dass**
der ringförmige Körper (60) mit dem zylindrischen Körper (50) durch eine Formkupplung zwischen mindestens einem Haken (62), der von dem zylindrischen Körper (50) axial vorsteht, und einem Vorsprung verbunden ist, der von dem ringförmigen Körper (60) radial vorsteht.

2. Hydraulischer Stoßdämpfer nach Anspruch 1, wobei die Stange (18) einen Kupplungssitz umfasst, der ein Profil aufweist, das zu einem Innenprofil des zylindrischen Körpers (50) und des ringförmigen Körpers (60) auf eine Weise komplementär ist, dass der zylindrische Körper (50) und der ringförmige Körper (60) mittels Formkupplung der jeweiligen Profile an der Stange (18) befestigt sind.

3. Hydraulischer Stoßdämpfer nach Anspruch 2, wobei die Stange (18) zwei Umfangsaussparungen an den axial äußersten Kanten des zylindrischen Körpers (50) und des ringförmigen Körpers (60) aufweist, wobei die Außenkanten radial zu der Achse der Stange (18) hin auf eine Weise vertieft sind, dass sie an den jeweiligen Umfangsaussparungen anschlagen.

4. Hydraulischer Stoßdämpfer nach einem der vorstehenden Ansprüche, wobei der Vorsprung, der radial von dem ringförmigen Körper (60) vorsteht, mindestens einen radialen Sitz (64) umfasst, der als eine Nut konfiguriert ist, in die der Haken (64) eingesetzt und befestigt wird.

5. Hydraulischer Stoßdämpfer nach einem der vorstehenden Ansprüche, wobei das Kunststoffmaterial, aus dem der Dichtungsring (54) besteht, ein Verbundwerkstoffmaterial ist, das mit Glasfasern oder Kohlenstofffasern verstärkt ist.

6. Hydraulischer Stoßdämpfer nach einem der vorstehenden Ansprüche, wobei der becherförmige Körper (32) vorzugsweise mit einer Schulter (38) versehen ist, die radial zu dem Inneren des becherförmigen Körpers (32) hin vorsteht und angepasst ist, um einen Haltepunkt auszubilden, an den der Hilfskolben (34) anschlägt, wenn sich der hydraulische Stoßdämpfer (10) in einer expandierten Endhubposition befindet.

7. Hydraulischer Stoßdämpfer nach einem der vorstehenden Ansprüche, wobei der Dichtungsring (54) eine offene ringförmige Form aufweist.

8. Hydraulischer Stoßdämpfer nach einem der vorstehenden Ansprüche, wobei der hydraulische Stoßdämpfer (10) als ein Zweirohrstoßdämpfer für die Fahrzeugfederung konfiguriert ist, umfassend ein äußeres zylindrisches Rohr, das mit einem Körperrohr (15) des hydraulischen Stoßdämpfers (10) zusammentrifft, und ein inneres zylindrisches Rohr, das mit dem zylindrischen Rohr (14) zusammentrifft, an das der becherförmige Körper (32) radial anschlägt, wobei das innere zylindrische Rohr zu dem äußeren zylindrischen Rohr koaxial ist und mit diesem eine ringförmige Kammer definiert, die in einem oberen Abschnitt davon mit Gas gefüllt ist, die Stange (18) zu den zylindrischen Rohren koaxial angeordnet ist und teilweise aus diesen herausragt.

9. Hydraulischer Stoßdämpfer nach einem der Ansprüche 1 bis 7, wobei der hydraulische Stoßdämpfer (10) als ein Einrohrhydraulikstoßdämpfer für die Fahrzeugfederung konfiguriert ist, umfassend nur das Körperrohr (15) des hydraulischen Stoßdämpfers (10), wobei das Körperrohr (15) mit dem zylindrischen Rohr (14) zusammentrifft, an das der becherförmige Körper (32) radial anschlägt.

10. Hydraulischer Stoßdämpfer nach einem der vorstehenden Ansprüche, wobei axiale Kanäle (44) auf der Innenoberfläche der Seitenwand (36) des becherförmigen Körpers (32) vorgesehen sind, die parallel zu einer Längsachse (z) des becherförmigen Körpers (32) expandieren und angepasst sind, um dem Dämpfungsfluid zu ermöglichen, aus der Arbeitskammer (52) axial auszutreten, wenn der Hilfskolben (34) zu dem expandierten Hubende des Stoßdämpfers (10) in die Arbeitskammer (52) hin gleitet, wobei die axialen Kanäle (44) einen Querschnitt aufweisen, dessen Fläche entlang der Längsachse (z) zu der expandierten Endlage hin kontinuierlich abnimmt.

11. Hydraulischer Stoßdämpfer nach einem der vorstehenden Ansprüche, wobei der becherförmige Körper (32) aus Kunststoffmaterial besteht.

## Revendications

1. Amortisseur hydraulique (10), en particulier pour une suspension de véhicule, comprenant
un tube cylindrique (14),
une tige (18) qui est agencée coaxialement au tube cylindrique (14) et en fait partiellement saillie,
un piston primaire (20) qui est fixé à une première extrémité de la tige (18) et est monté coulissant dans le tube cylindrique (14) de manière à diviser le volume interne du tube cylindrique (14) dans une chambre d'extension (22) et une chambre de compression (24), et
un tampon hydraulique (30) qui est agencé dans la chambre d'extension (22) et adapté pour fonctionner pendant la course d'extension de l'amortisseur (10) pour dissiper hydrauliquement l'énergie cinétique lorsque l'amortisseur (10) s'approche d'une position de fin de course d'extension ;
dans lequel le tampon hydraulique (30) comprend un corps en forme de coupelle (32) monté dans la chambre d'extension (24) de l'amortisseur (10), coaxialement à celle-ci, et un piston auxiliaire (34) monté sur ladite première extrémité de la tige (18) de l'amortisseur (10), coaxialement à celle-ci, sous le piston primaire (20) de l'amortisseur, et
dans lequel le corps en forme de coupelle (32) comprend une paroi latérale (36) qui définit, conjointement avec le piston auxiliaire (34) du tampon hydraulique (30), une chambre de travail (52) dans laquelle un fluide d'amortissement de l'amortisseur (10) est comprimé par le piston auxiliaire (34) du tampon hydraulique (30) pendant la course d'extension de l'amortisseur (10),
le piston auxiliaire (34) comprend un corps cylindrique (50), fixé à la tige (18) de l'amortisseur (10) et ayant un diamètre externe inférieur au diamètre interne de la paroi latérale (36) du corps en forme de coupelle (32), un anneau d'étanchéité (54), qui est monté axialement coulissant autour du corps cylindrique (50) et est adapté pour assurer l'étanchéité contre la surface interne de la paroi latérale (36) du corps en forme de coupelle (32), et un premier et un second élément de butée annulaire (56, 58), qui sont contraints axialement au corps cylindrique (50) et sont conçus pour limiter axialement, dans les deux sens, le mouvement de coulissement axial de l'anneau d'étanchéité (54) le long du corps cylindrique (50), l'anneau d'étanchéité (54), le premier élément de butée (56) et le second élément de butée (58) étant conçus de telle sorte que lorsque l'anneau d'étanchéité (54) coulisse le long de la surface interne de la paroi latérale (36) du corps en forme de coupelle (32) pendant la course d'extension de l'amortisseur (10), l'anneau d'étanchéité (54) vient en butée contre le premier élément de butée (56) et il n'y a pas de passage de fluide d'amortissement d'un côté à l'autre de l'anneau d'étanchéité (54), tandis que pendant la course de compression de l'amortisseur (10), l'anneau d'étanchéité (54) vient en butée contre le second élément de butée (58) et le passage du fluide d'amortissement d'un côté à l'autre de l'anneau d'étanchéité (54) est autorisé,
dans lequel le corps cylindrique (50) et l'anneau d'étanchéité (54) sont constitués de matière plastique, et dans lequel le piston auxiliaire (34) comprend en outre un corps annulaire (60) constitué de matière métallique, accouplé au corps cylindrique (50) sur le côté du piston auxiliaire (34) axialement opposé à celui qui fait face vers la chambre de travail (52), ledit corps annulaire (60) étant adapté pour former une surface de support ou une butée axiale sur le corps cylindrique (50),
**caractérisé en ce que**
le corps annulaire (60) est relié au corps cylindrique (50) par accouplement de forme entre au moins un crochet (62), faisant saillie axialement du corps cylindrique (50), et une proéminence faisant saillie radialement du corps annulaire (60).

2. Amortisseur hydraulique selon la revendication 1, dans lequel la tige (18) comprend un siège d'accouplement, ayant un profil complémentaire à un profil interne du corps cylindrique (50) et du corps annulaire (60), de telle manière que ledit corps cylindrique (50) et ledit corps annulaire (60) sont fixés à la tige (18) au moyen d'un accouplement de forme des profils respectifs.

3. Amortisseur hydraulique selon la revendication 2, dans lequel la tige (18) a deux évidements circonférentiels, au niveau des bords axialement les plus externes du corps cylindrique (50) et du corps annulaire (60), lesdits bords externes étant évidés radialement vers l'axe de la tige (18), de manière à venir en butée contre les évidements circonférentiels respectifs.

4. Amortisseur hydraulique selon l'une quelconque des revendications précédentes, dans lequel la proéminence faisant radialement saillie du corps annulaire (60) comprend au moins un siège radial (64) conçu comme une rainure dans laquelle le crochet (64) est inséré et fixé.

5. Amortisseur hydraulique selon l'une quelconque des revendications précédentes, dans lequel la matière plastique dont l'anneau d'étanchéité (54) est constitué est une matière composite, renforcée par des fibres de verre ou des fibres de carbone.

6. Amortisseur hydraulique selon l'une quelconque des revendications précédentes, dans lequel le corps en forme de coupelle (32) est de préférence pourvu d'un épaulement (38), qui fait saillie radialement vers l'intérieur du corps en forme de coupelle (32) et est adapté pour former un arrêt contre lequel le piston auxiliaire (34) vient en butée lorsque l'amortisseur hydraulique (10) est dans une position de fin de course étendue.

7. Amortisseur hydraulique selon l'une quelconque des revendications précédentes, dans lequel l'anneau d'étanchéité (54) a une forme annulaire ouverte.

8. Amortisseur hydraulique selon l'une quelconque des revendications précédentes, dans lequel l'amortisseur hydraulique (10) est conçu comme un amortisseur hydraulique bitube pour suspension de véhicule, comprenant un tube cylindrique externe coïncidant avec un tube de corps (15) de l'amortisseur hydraulique (10), et un tube cylindrique interne coïncidant avec le tube cylindrique (14) contre lequel le corps en forme de coupelle (32) vient en butée radialement, ledit tube cylindrique interne étant coaxial au tube cylindrique externe et définissant avec lui une chambre annulaire remplie de gaz dans sa partie supérieure, la tige (18) étant agencée coaxialement auxdits tubes cylindriques et émergeant partiellement de ceux-ci.

9. Amortisseur hydraulique selon l'une quelconque des revendications 1 à 7, dans lequel l'amortisseur hydraulique (10) est conçu comme un amortisseur hydraulique monotube pour suspension de véhicule, comprenant uniquement le tube de corps (15) de l'amortisseur hydraulique (10), ledit tube de corps (15) coïncidant avec le tube cylindrique (14) contre lequel le corps en forme de coupelle (32) vient en butée radialement.

10. Amortisseur hydraulique selon l'une quelconque des revendications précédentes, dans lequel des canaux axiaux (44) sont prévus sur la surface interne de la paroi latérale (36) du corps en forme de coupelle (32) qui s'étendent parallèlement à un axe longitudinal (z) du corps en forme de coupelle (32) et sont adaptés pour permettre au fluide d'amortissement de sortir axialement de la chambre de travail (52) lorsque le piston auxiliaire (34) coulisse dans la chambre de travail (52) vers la fin de course étendue de l'amortisseur (10), lesdits canaux axiaux (44) ayant une section transversale dont l'aire diminue continuellement le long de l'axe longitudinal (z) vers ladite fin de déplacement étendue de l'amortisseur (10).

11. Amortisseur hydraulique selon l'une quelconque des revendications précédentes, dans lequel le corps en forme de coupelle (32) est constitué de matière plastique.
